# EUROPEAN PATENT SPECIFICATION

(11) **EP 0 981 941 B1**
(45) Date of publication and mention of the grant of the patent: **14.01.2004**
(21) Application number: 99202791.2
(22) Date of filing: 27.08.1999
(51) Int. Cl.: A01C 23/02, A01M 7/00, A01B 73/02

(54) **Vehicle provided with an application device.**
Fahrzeug mit Jauchunterbringer
Véhicule équipé d'un enfouisseur

(30) Priority: 27.08.1998 NL 1009955
(43) Date of publication of application: 01.03.2000
(73) Proprietor: Slootsmid B.V., 7245 NR Laren (NL)
(72) Inventor: Ebbekink, Egberg, NL- 7245 PG Laren (NL); Eggink, Lambertus Hendrikus, NL-7245 NS Laren (NL)
(74) Representative: 't Jong, Bastiaan Jacob

(56) References cited:
- FR-A- 2 005 280
- FR-A- 2 627 050
- FR-A- 2 717 344
- NL-A- 9 401 835

## Description

The present invention relates to a vehicle provided with an application device.

Agricultural vehicles are usually provided with an application device with which the land can be worked, such as manure appliers, can be sprayed or treated, such as spraying machines, mowing machines, sowing machines and harvesting machines.

The invention relates in fact to all manner of application devices which are placed on, in front of or behind a vehicle and which during application extend as far as possible to the sides adjacently of the vehicle in order to obtain the greatest possible application width. These vehicles have the drawback however that the application means must be stowed away before or after the application such that the vehicle can be moved over the public highway, wherein the legal maximum permitted vehicle width must be taken into account.

It will be apparent that laterally protruding application means can cause hazardous situations but that they are also a limiting factor in terms of the maximum possible operating width.

The present invention has for its object to provide an application device which obviates the above stated drawbacks as far as possible, while a safer application device is nevertheless provided which can operate at the greatest possible working width.

This is achieved with the application device according to the invention in that it is coupled to a vehicle and comprises a frame which is coupled to at least one boom which is provided with application means and which is movable with moving means between a position to the side adjacently of the vehicle and a folded-away, standing position, wherein the moving means co-act with rotation means rotating the boom such that in the standing position the boom with the application means lies within the vehicle width dimension, and wherein the at least one boom is rotatable on its longitudinal axis.

The present invention is based on the insight that safety is improved when, in the folded-away and standing position, the boom is also rotated such that the application means are folded away from a position extending to the sides adjacently of the vehicle. In addition, the extra space created by folding away of the application means can be used to lengthen the boom.

The rotation of the boom necessary according to the invention can be performed with diverse types of rotation means. According to a first preferred embodiment the moving means comprise for this purpose pivoting means which more preferably comprise a pivot arranged obliquely of the boom. This means that during the displacement from the lying to the standing position (and vice versa) the boom not only pivots but also rotates on its longitudinal axis. It will be apparent that the angle defining the inclining position of the pivot also determines the extent to which the application means rotate.

According to a second embodiment the rotation means comprise a gear transmission. According to another embodiment the rotation means comprise a cam follower driven by resetting means.

Although the application device according to the invention can operate with only one laterally extensible boom, it will be apparent that use can much more preferably be made of two booms which can each be moved outward on one side of the vehicle and herein undergo the rotation essential to the invention. When both booms are also connected via the moving means according to the invention to a central, stationary boom, there results an application device with a maximum operating width.

As specific example of the application device according to the invention, the application means comprise slit coulters with which manure can be introduced into the ground.

Mentioned and other features of the application device and the vehicle according to the invention will be further elucidated hereinbelow on the basis of a number of embodiments which are only given by way of example, while reference is made to the annexed drawing.

In the drawing:
figure 1 shows a perspective view of a vehicle with the application device according to the invention with the booms in the standing position;
figure 2 shows detail II of figure 1 with the boom in the position lying to the sides adjacently of the vehicle;
figure 3 is a top view of figure 1 as according to arrow III;
figure 4 shows detail IV of figure 2;
figures 5A and 5B each show a view as according to respective arrow IVA and arrow IVB of figure 4; and

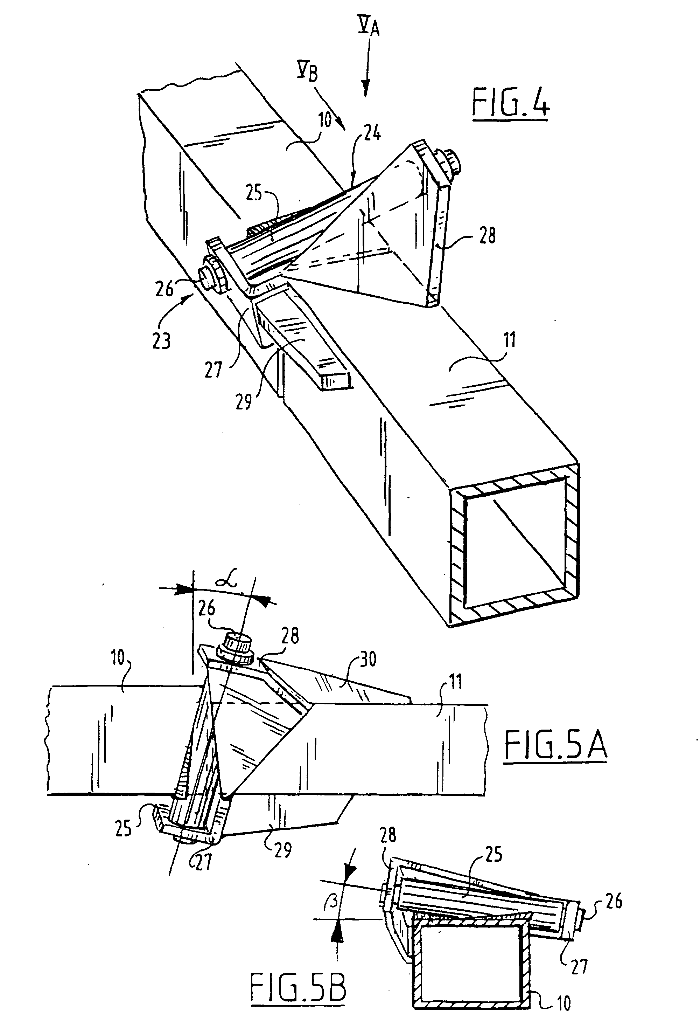

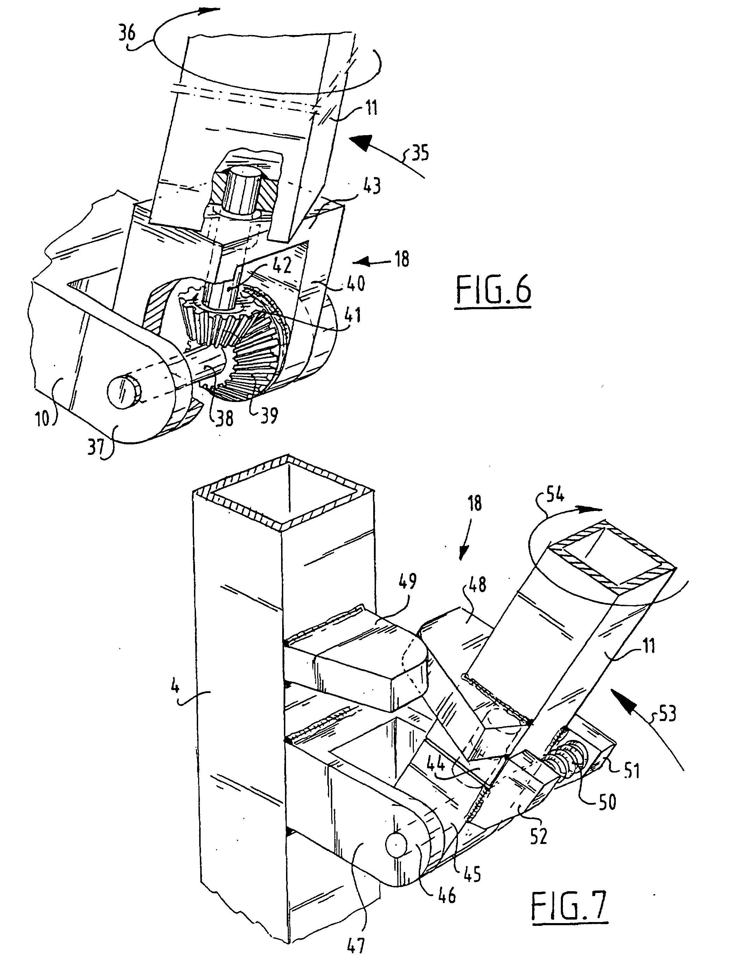

figures 5 and 6 each show a variant of the moving means according to the invention co-acting with rotation means.

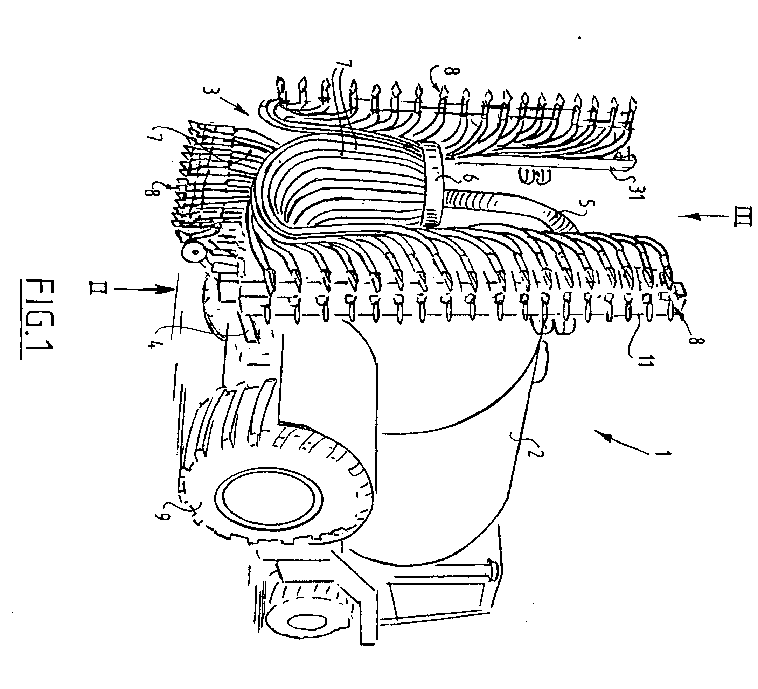

Figure 1 shows a vehicle 1 provided with a manure tank 2 for introducing manure into the ground via application device 3. The application device is coupled to vehicle 1 via a frame 4. The manure is supplied via hose 5 to a cutting and distributing device 6 and via hoses 7 to the slit coulters 8 connected thereto.

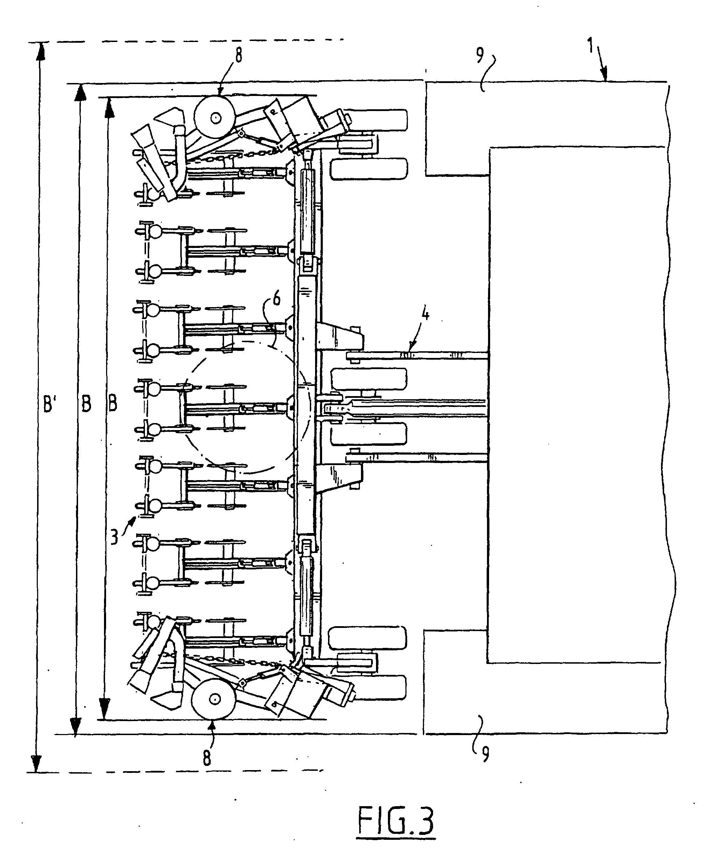

Figure 1 together with figure 3 clearly shows that in the standing position of the application device the application means, in this case slit coulters 8, lie wholly within the width dimension B of vehicle 1 or of frame 4, which in this case is defined by wheels 9. Figure 3 shows clearly that as a result of the rotation the width of application device 3 has decreased from B' to B.

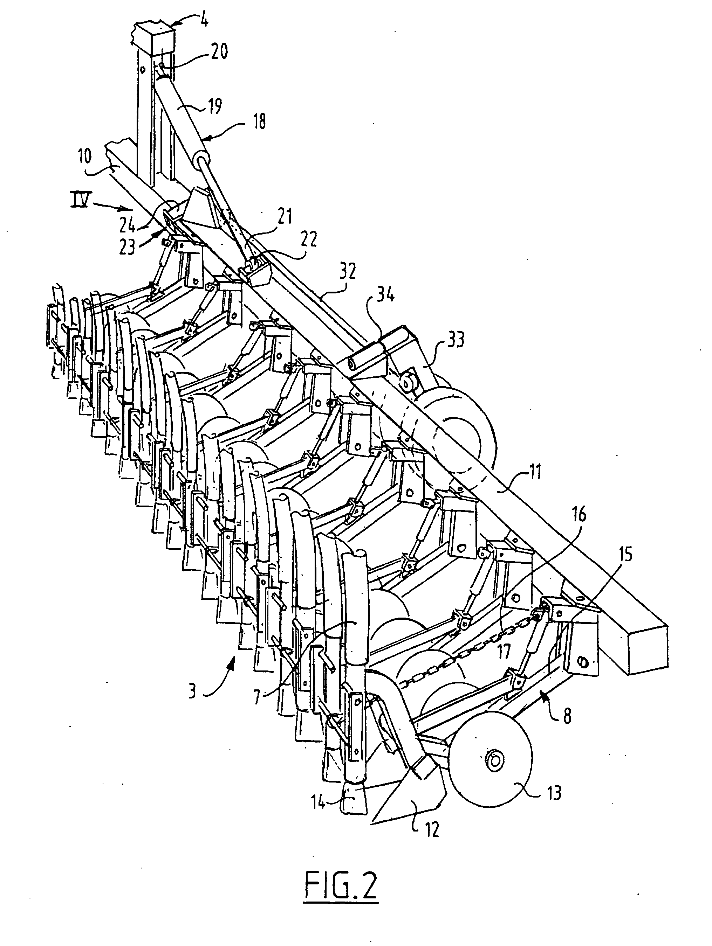

Figure 2 shows in more detail the structure of application device 3 which is coupled to vehicle 1 via frame 4. Application device 3 comprises a middle boom 9 and a movable boom 11. Both booms are provided with application means 8, in this case slit coulters. These latter comprise a coulter plate 12 and a rotatable coulter disc 13, whereby a slit can be formed in the ground and manure can be introduced into the ground via the nozzle 14 connected to hose 7. Coulter plate 12 and coulter disc 13 are horizontally movable via a rod 15 and via a pin. The vertical movement is bounded by chain 16. The working depth is adjustable using accumulator cylinder 17.

Moving means 18 comprise a hydraulic cylinder 19 which is connected on one side to frame 4 via a ball joint 20 (not shown) and on the other to the movable boom 11 via a cylinder rod 21 and a ball joint 22. Moving means 18 co-act with rotation means 23 which are formed in this case by a pivot 24 arranged obliquely on both booms 10 and 11.

Pivot 24 comprises a pivot sleeve 25 connected to boom 10 and a pivot pin 26 mounted therein. Pivot pin 26 is coupled movably to boom 11 via a fork 27 and 28. Both forks 27 and 28 are further strengthened by means of stiffening plates 29 and 30 (see also figures 5A and 5B).

It will be apparent that the degree of rotation can be adjusted by adjusting the angle α (the angle relative to the longitudinal direction of booms 10 and 11) and the angle β relative to the horizontal position of the two booms.

The application device 3 operates as follows. By energizing cylinder 19 the booms 11 and 31 are moved from the standing position shown in figures 1 and 3 to the position protruding to the sides adjacently of the vehicle (shown in figure 2), wherein booms 11 and 31 have also performed a rotation on their longitudinal axis. A rotation which is determined by the angles α and β of pivot 24.

Figure 2 further shows that a support wheel 33 connected to boom 11 via a pivot 34 can be folded in and out via a pivot rod 32.

Figure 6 shows another embodiment of moving means 18 according to the invention which realize the tilting movement of boom 11 relative to boom 10 by means of a tilting movement as according to arrow 35 and a rotation movement as according to arrow 36. The tilting movement is carried out with two co-acting forks 37 and 40 through which extends a tilting pin 38 to which a bevel gear 39 is fixed. Bevel gear 39 co-acts with a bevel gear 41 fixed on a rotation pin 42 which is mounted in fork piece 43 of fork 40 and is fixedly connected to boom 11. Energizing of cylinder 19 brings about a movement in the direction of arrow 35 (or in reverse direction), and because bevel gear 41 herein unwinds over bevel gear 39 the boom 11 rotates in the direction of arrow 36 (or vice versa).

Figure 7 shows yet another embodiment of moving means 18 according to the invention. Boom 11 is connected via a rotation pin 44 to a frame part 45 which via a pin 46 is mounted pivotally in a fork 47 which is connected to frame 4. Boom 11 is provided with a cam follower 48 which co-acts with a cam 49 and is pressed thereagainst with a spring 50 arranged between a cam 51 connected to boom 11 and a cam 52 connected to frame part 45.

A movement performed with cylinder 19 results in a pivoting movement as according to arrow 53, wherein cam follower 48 is displaced along cam 49 and, urged by spring 50, carries out a pivoting movement as according to arrow 54.

The above shown application devices with the moving means 18 according to the invention demonstrate that a vehicle provided with an application device or connectable thereto can transport such application means which in the standing, folded-away position have a minimal width and therein have no laterally protruding parts. The reduction in width can be utilized to widen the application booms, whereby the operating width of the application device increases further.

It will be apparent that the described application device embodied with the slit coulters must not be interpreted as limitative but that these slit coulters can be replaced by any type of application means with which surface or ground over or along which the vehicle travels can be worked over a width which is considerably greater than the vehicle, while a safe situation is created during transport because hazardous protruding parts are avoided, or the whole application device remains within the vehicle width.

## Claims

1. Vehicle (1) provided with an application device (3) which is coupled to the vehicle (1), comprising a frame (4) which is coupled to at least one boom (11) which is provided with application means (8) and which is movable with moving means (18) between a position to the side adjacently of the vehicle (1) and a folded-away, standing position, wherein the moving means (18) co-act with rotation means (23) rotating the boom (11) such that in the standing position the boom (11) with the application means (8) lies within the vehicle (1) width dimension,
**characterized in that**
the at least one boom (11) is rotatable on its longitudinal axis.

2. Vehicle (1) as claimed in claim 1, wherein the moving means (18) comprise pivoting means (24).

3. Vehicle (1) as claimed in claim 2, wherein the moving means (18) and the rotation means (23) comprise a pivot (24) arranged obliquely of the boom (11).

4. Vehicle (1) as claimed in claim 1, wherein the rotation means (23) comprise a gear transmission (39,41).

5. Vehicle (1) as claimed claimed in claim 1, wherein the rotation means (23) comprise a cam follower (48) driven by resetting means (50).

6. Vehicle (1) as claimed in claims 1-5, wherein the movable boom (11) is coupled to the frame (4) via a central boom (9) provided with application means (8).

7. Vehicle (1) as claimed in claim 6, wherein two movable booms (11) are coupled to the frame (4) via the central boom (9) .

8. Vehicle (1) as claimed in claims 1-7, wherein the application means (8) comprise slit coulters (12,13).

## Patentansprüche

1. Fahrzeug (1), das mit einer am Fahrzeug angekuppelten Bearbeitungsvorrichtung (3) versehen ist, die einen Rahmen (4) aufweist, mit dem wenigstens ein Träger (11) gekuppelt ist, der mit der Bearbeitungsvorrichtung (8) ausgestattet und über Bewegungsmittel (18) zwischen einer Position seitlich benachbart zum Fahrzeug (1) und einer eingefalteten Standposition beweglich ist, wobei die Bewegungsmittel (18) mit Verdrehmitteln (23) zusammenwirken, die den Träger (11) derart verdrehen, daß in der stehenden Position der Träger (11) mit der Bearbeitungsvorrichtung (8) innerhalb der Breitenabmessung des Fahrzeugs (1) liegt,
**dadurch gekennzeichnet,**
**daß** wenigstens ein Träger (11) um seine Längsachse drehbar ist.

2. Fahrzeug (1) nach Anspruch 1, bei welchem die Bewegungsmittel (18) eine Schwenkvorrichtung (24) aufweisen.

3. Fahrzeug (1) nach Anspruch 2, bei welchem die Bewegungsmittel (18) und die Verdrehmittel (23) einen Schwenkzapfen (24) aufweisen, der schräg gegenüber dem Träger (11) angeordnet ist.

4. Fahrzeug (1) nach Anspruch 1, bei welchem die Verdrehmittel (23) eine Getriebeübertragung (39, 41) aufweisen.

5. Fahrzeug (1) nach Anspruch 1, bei welchem die Verdrehmittel (23) ein Nockenfolgeorgan (48) aufweisen, das durch Rückstellmittel (50) antreibbar ist.

6. Fahrzeug (1) nach den Ansprüchen 1 bis 5, bei welchem der bewegliche Träger (11) mit dem Rahmen (4) über einen Mittelträger (9) gekuppelt ist, der mit einer Bearbeitungsvorrichtung (8) ausgerüstet ist.

7. Fahrzeug (1) nach Anspruch 6, bei welchem zwei bewegliche Träger (11) am Rahmen (4) über den Mittelträger (9) angekoppelt sind.

8. Fahrzeug (1) nach den Ansprüchen 1 bis 7, bei welchem die Bearbeitungsvorrichtung (8) Sechscheiben (13) und Pflugscharen (12) aufweist.

## Revendications

1. Véhicule (1) équipé d'un dispositif d'application (3) gui est couplé au véhicule (1), comprenant un cadre (4) gui est couplé à au moins un bras (11) qui est équipé de moyens d'application (8) et qui est mobile avec des moyens mobiles (18) entre une position vers le côté de manière adjacente au véhicule (1) et une position haute repliée, dans laquelle les moyens mobiles (18) co-agissent avec des moyens de rotation (23) tournant le bras (11) de sorte que dans la position haute le bras (11) avec les moyens d'application (8) repose dans la dimension de largeur du véhicule (1)
**caractérisé en ce que**
le au moins un bras (11) est rotatif sur son axe longitudinal.

2. Véhicule (1) selon la revendication 1, dans lequel les moyens mobiles (18) comprennent des moyens pivotants (24).

3. Véhicule (1) selon la revendication 2, dans lequel les moyens mobiles (18) et les moyens de rotation (23) comprennent un pivot (24) agencé de manière oblique par rapport au bras (11).

4. Véhicule (1) selon la revendication 1, dans lequel les moyens de rotation (23) comprennent une transmission par engrenages (39, 41).

5. Véhicule (1) selon la revendication 1, dans lequel les moyens de rotation (23) comprennent un galet suiveur (48) entraîné par des moyens de rappel (50).

6. Véhicule (1) selon la revendications 1 à 5, dans lequel le bras mobile (11) est couplé au cadre (4) par l'intermédiaire d'un bras central (9) équipé de moyens d'application (8).

7. Véhicule (1) selon la revendication 1, dans lequel deux bras mobiles (11) sont couplés au cadre (4) par l'intermédiaire d'un bras central (9).

8. Véhicule (1) selon la revendications 1 à 7, dans lequel les moyens d'application (8) comprennent des coutres tranchairs.
